# NEW EUROPEAN PATENT SPECIFICATION

(11) **EP 0 306 655 B2**
(45) Date of publication and mention of the opposition decision: **14.01.1998**
(45) Mention of the grant of the patent: 03.06.1992
(21) Application number: 88111017.5
(22) Date of filing: 11.07.1988
(51) Int. Cl.: A23L 1/182

(54) **Rice product**
Reisprodukt
Produit de riz

(30) Priority: 12.08.1987 US 84621
(43) Date of publication of application: 15.03.1989
(73) Proprietor: SOCIETE DES PRODUITS NESTLE S.A., 1800 Vevey (CH)
(72) Inventor: Groesbeck, Cheryl Ann, Shelton Conn. 06484 (US); Hsu, Jau Yann, Brookfield Conn. 06804 (US); Larson, Gary John, New Milford Conn. 06776 (US)

(56) References cited:
- EP-A- 0 170 404
- US-A- 4 101 683
- US-A- 4 133 898
- US-A- 4 473 593
- US-A- 4 614 660
- US-A- 4 707 371
- Declaration of David E. Kohlwey

## Description

The present invention relates to a process for the production of a convenient rice product, more particularly to a pre-cooked rice product that requires no cooking for consumption.

There are basically three kinds of commercial parboiled rice products :
1) Regular parboiled rice : this is prepared for consumption by cooking (simmering) for about 20 minutes and the product has a good texture. However, the time taken to prepare this product for consumption is rather long and depending on the amount of water used and the heating conditions, the texture is not always consistent and, therefore, the product is not particularly convenient to use.
2) Quick cooking parboiled rice : this is 85-95% gelatinised and is produced by partial cooking and drying of regular parboiled rice. This product also requires cooking (simmering) for consumption but, as the time required is only about 5-10 minutes, it is more convenient to use than regular parboiled rice. However, depending on cooking conditions, the water absorption of rice is usually varied and consequently, the rice texture is not consistent. It also requires attention during cooking and, therefore, it is not really convenient.
3) Instant rice : this is 95-100% gelatinised and is usually produced by complete cooking of the rice followed by low temperature drying (50°-65° C)to a moisture content of about 10% and then high temperature drying (180°-350° C) for a high degree of puffing. This type of rice is more convenient than quick cooking rice because it is reconstituted for consumption by rehydrating in boiled hot water for a period of from only about 1 to 5 minutes. The high degree of puffing is carried out because of the requirement of instant rehydration but, because of this high degree of puffing, the rice structure is usually damaged and, consequently, the texture of the product is not good.

US-A-4614660 describes and claims a continuous process for producing a quick cooking vegetable comprising:
(a) spraying moisture and steam on discrete pieces of a vegetable that contains carbohydrates as said vegetable moves along on a conveyor belt until the vegetable attains a moisture content of between about 50 weight percent and about 97 weight percent and a resultant temperature of between about 72° C and about 110° C such that the vegetable pieces are completely gelatinized,
(b) pre-drying the vegetable pieces by hot air at velocities ranging between about 100 m/s and about 140 m/s to a moisture content of between about 20 weight percent and about 30 weight percent, and
(c) finally drying the vegetable pieces by hot air at velocities ranging between about 75 m/s and about 110 m/s to a final moisture content between about 5 weight percent and about 15 weight percent.

It is stated in US-A-4614660 that the vegetables prepared by the process described and claimed can be cooked in about three to five minutes by swelling in hot water.

It would be very desirable to produce a convenient rice product which can be reconstituted simply and quickly like instant rice while still possessing the good texture of regular cooked rice. Up to the present time, this has not been achieved because fast rehydration requires a change of the rice structure and texture. In order to maintain the good rice structure, it is important that the rehydration time is at least 8 minutes, preferably at least 9 or 10 minutes.

We have found, surprisingly, that a mildly-puffed convenient rice product, having a good and constant texture when reconstituted to a palatable state by rehydration, can be produced by a process which does not involve a high degree of puffing of low moisture coooked rice and which can be reconstituted for consumption simply by rehydrating in boiled, hot water and allowing to stand for a minimum of 9 to 10 minutes. Since there is no high puffing step, the rice has a better texture than conventional instant rice. Compared with quick cooking rice, since cooking and attention are not required in the preparation for consumption, not only is it more convenient to use but the texture and quality of the rice product are also more constant.

Puffing can be defined as the expansion of rice grain size and this can be expressed by the bulk density which is measured by weighing the loose weight of dried rice in a 100 ml graduated cylinder. It is essential that the mildly-puffed convenient rice product of the present invention has a bulk density of from 37 to 42 and preferably from 38 to 41 g/100 cc. In addition, to achieve a palatable state on reconstitution, 100 g of the product of the present invention should absorb from 195 to 225 g of water after 10 minutes rehydration in 500 g hot water which has just been boiled without any further heating, which we shall refer to in this invention as "boiled, hot water". In contrast, non-puffed quick cooking rice usually has a bulk density of from 43 to 50 g/100 cc and absorbs less water during rehydration while highly-puffed instant rice usually has a bulk density of from 30 to 36 g/100 cc and absorbs more water after 1 to 5 minutes rehydration.

According to the present invention there is provided a process for the production of a convenient precooked rice product wherein rice grains are cooked with water at a temperature and for a time sufficient that their moisture content is from 55% to 75% by weight and dried in two stages characterised in that the drying temperature in both stages is from 140° to 185°C and that the drying is carried out firstly under stationary conditions for a period from 2 to 20 minutes to a moisture content of from 20 to 35% and secondly under agitated conditions for a period of from 30 to 120 seconds to a moisture content of from 3 to 15%, such that the dried rice has a bulk density of from 37 to 42 g/100 cc. For obtaining a palatable product upon rehydration, the dried product is rehydrated in boiled, hot water for a minimum of 8 minutes.

Any type of rice grain can be used, for example, milled white rice (long or short grain), arborio rice, basmati rice but the process of this invention is particularly advantageous for parboiled rice.

In addition to the hereinabove described methods of preparing these rice products for consumption i.e. regular parboiled rice, quick cooking parboiled rice, instant rice and the convenient rice prepared by the process of the present invention, all these rice products can, if desired, be prepared for consumption by microwave cooking. The time required for microwave cooking ranges from about 2 to 20 minutes depending upon the degree of rice gelatinisation, rice puffing, variety of rice and the amount of rice and water used during microwave cooking. For example, to prepare the convenient rice produced by the process of the present invention for consumption in a microwave oven as utilised commonly in the home, it is possible to cook 120 g rice with 230 cc water at high power in 5 minutes and 240 g rice with 460 cc water at high power in 8 minutes. These times are shorter than those required for regular or quick-cooking parboiled rice and the convenient rice produced by the process of the present invention has a better texture than instant rice after preparation for consumption by microwave cooking because of the optimum puffing of the rice.

The cooking may be carried out by boiling the rice grains in water, steaming,or by a combination of boiling and steaming. Superatmospheric pressure may be used, if desired. The temperature of the cooking may be from 90° C to 110° C and preferably from 95° C to 105° C and the duration of the cooking may be from 5 to 20 minutes. The pH during cooking may conveniently be from 3.0 to 7.5. Preferably, for a product which is to be prepared for consumption by heating in boiled, hot water, the pH during cooking is from 6.5 to 7.5, while for a product which is to be prepared for consumption by microwave cooking the pH during cooking is preferably from 3.0 to 5.5, especially 3.5 to 5.0. Optionally, the rice grains may be soaked in water prior to cooking.

Drying in two stages, first under stationary and then under agitated conditions at from 140° C to 185° C, in each stage, is critical for obtaining the required bulk density which results in the water absorption properties which provide the excellent rehydrated texture of the convenient precooked rice product of the present invention when rehydrated for the stated time. In both drying steps the cooked rice is preferably dried at a temperature from 145° C to 180° C and especially from 150° C to 175° C.

In the first drying step, the cooked rice is preferably dried to a moisture content of from 23 to 33%. The drying under stationary conditions may be carried out on a regular belt dryer or on a high velocity belt dryer with nozzle tubes that produce hot air. When the rice is dried in a regular, hot air belt dryer, it is conveniently fed onto the dryer in a thin layer. The thickness of the layer of rice grains on the belt may be from 2 to 10 mm and preferably from 3 to 6 mm. The velocity of the hot air is conventional and is usually from 10 to 20 meters per minute. The duration of the first drying step in a regular belt dryer to obtain the required moisture content is usually from 10 to 20 minutes and preferably from 12 to 18 minutes depending on the drying temperature used and velocity of the hot air. When the rice is dried in a high velocity hot air dryer, the cooked rice may be dried by passing the hot air through a layer of cooked rice, which has preferably been dewatered, for instance by suction, to remove some surface moisture. The thickness of the layer of cooked rice is conveniently from 5 to 12 mm thick, and the drying time may be from 2 to 8 minutes, preferably from 3 to 7 minutes. The velocity of the hot air preferably ranges from 100 to 200 metres/min. After the first drying step, the partially dried rice cake is broken and the rice separated. The dewatering step which advantageously precedes the first drying step when using a high velocity hot air dryer can reduce the stickiness of the cooked rice and enables a thicker layer of rice to be dried. In particular, the dewatering step can reduce the sticking of rice cooked at a pH of 6.5 to 7.5.

In the second drying step, the partially dried rice grains are preferably dried to a moisture content of from 6% to 12% by weight. The drying under agitated conditions may be carried out in a vibrating dryer such as a vibrating fluid bed dryer or a high velocity belt dryer with nozzle tubes that produce hot air similar to the one used in the first drying step. The velocity of the hot air generally ranges from 20 to 200 metres/min and the drying time is usually from 30 to 120 seconds. Preferably, the velocity of the hot air in the second drying step is not greater than that in the first drying step.

In both drying steps, the temperature, hot air flow and times are adjusted to create a rice product with the required bulk density, optimum water absorption and texture after about 10 minutes rehydration with boiled, hot water. The duration of the cooking time also affects the bulk density, water absorption and texture and for longer cooking times, the drying temperature and/or hot air velocity are advantageously lower, while for shorter cooking times, the drying temperature and/or hot air velocity are advantageously higher. Compared with conventionally puffed rice which is usually dried at a lower temperature for a longer time (e.g. 50° C for 2 hours) to a moisture content of about 10% and then puffed at a high temperature for a short period of time (e.g. 180°-350°C for a few seconds) the rice prepared by the process of the present invention is only mildly puffed and has good texture. In addition, the rehydration and the water absorption is improved by the longer rehydration time of at least 8, 9 or preferably 10 minutes for conventionally puffed rice.

Another advantage of the present invention is that by drying at a temperature of from 140° C to 185° C instead of at a lower temperature e.g. about 50° C to 60° C as for conventionally puffed rice the rice need not be cooked completely in the boiling step, thus reducing cooking losses which can amount to about 10% or more. The cooking is further completed in the drying step at temperatures from 140° C to 185° C in the present invention.

The present invention also provides a convenient rice product whenever produced by a process hereinbefore described.

It should be understood that although the product of this invention may be reconstituted by rehydrating with boiled, hot water in 8 minutes, the texture of the reconstituted product is superior when the rehydration time is 10 minutes or more. However, reconstitution times appreciably longer than 10 minutes reduce the convenience of the product.

The following Examples further illustrate the present invention.

### Example 1

1000 g parboiled rice were boiled in water at pH of 7.0 for 15 minutes, rinsed with cold water and drained to give a total weight of 2840 g (68.5% moisture). The rice was then placed in a layer of 5mm on a Proctor & Schwartz's hot air belt dryer with a hot air velocity of 12 metres/min and dried at 175° C for 12 minutes whereupon the moisture content was reduced to 32%, after which the rice grains did not stick together. The partially dried rice was then placed on a Witte's vibrating, fluid bed dryer in a layer of 8 mm and dried at 175° C for 1 minute to a moisture content of 8-10%. The dehydrated rice had a bulk density of 40 g/100 cc. 180 g of this rice product was prepared for consumption by adding to 500 cc boiled, water and allowed to stand for 10 minutes.376 g water was absorbed and the product had a good, tender, firm, even texture.

### Comparative Example A

180 g of regular parboiled rice were prepared for consumption by boiling for 20 minutes in 500 cc water. 500 g water were absorbed. Because the cooked rice was not rinsed, it was softer and more starchy than the reconstituted product of Example 1.

### Comparative Example B

A quick cooking parboiled rice was prepared by boiling 1000 g parboiled rice for 15 minutes to 68.5% moisture, and then drying at 50° C for 2 hours. The dehydrated rice had a bulk density of 43 g/100 cc.180 g of this product were prepared for consumption by adding to 1000 cc of boiling water and simmering for 10 minutes. 344 g water were absorbed but the product had a more grainy and slightly undercooked texture when compared with the reconstituted product of Example 1.

### Comparative Example C

An instant parboiled rice was prepared by boiling 1000 g parboiled rice for 20 minutes to 70% moisture, then drying in a hot air dryer at 50° C for 3 hours and finally puffing at 240° C for 10 seconds. The dehydrated rice had a bulk density of 32 g/100 cc.180 g of this instant parboiled rice were prepared for consumption by adding to 500 cc boiled, hot water and allowing to stand for 5 minutes. 415 g water were absorbed but the product had a broken rice texture and had no structural characteristic of rice.

### Example 2

1000 g parboiled rice were boiled in water with pH of 7.0 for 15 minutes, rinsed with cold water and drained to give a total weight of 2840 g (68.5% moisture). The cooked rice was then dewatered for one minute by placing the rice under force of suction. The rice was then placed in a hot air dryer (12 mm thick) with a jet-tube nozzle (Wolverine's Jetzone dryer), the hot air velocity was 150 meters/min and the temperature was 150° C. After drying for 5 minutes to a moisture content of 25%, the partially dried rice cake was then broken, the rice was separated and dried again at the same temperature and velocity for 45 seconds. The dehydrated rice had a bulk density of 39 g/100 cc.180 g of this rice was added to 500 cc boiled, hot water and allowed to stand for 10 minutes. 374 g water was absorbed and the product had a good, tender firm, even texture.

### Comparative Example D

By following a similar procedure to that described in Example 2, but where the velocity of hot air used was 75 meters/min and pre-drying time was 10 minutes, the dehydrated rice had a bulk density of 44 g/100 cc and 180 g of rice absorbed 340 g boiled, hot water after 10 minutes. The rehydrated rice texture was hard and grainy.

### Comparative Example E

By following a similar procedure to that described in Example 2, but where the hot air velocity was 450 meters/min and the pre-drying time was 3 min, the dehydrated rice had a bulk density of 36 g/100 cc and 180 g of this rice absorbed 410 g boiled, hot water after 10 minutes. The texture of the rehydrated rice was soft and had no structural characteristics of rice. The same rice was rehydrated for only 7 min, the water absorbed was 317 g but the texture was still soft.

### Comparative Example F

By following a similar procedure to that described in Example 2, but where the drying temperature was 190° C and the pre-drying time was 4 min, the dehydrated rice had a bulk density of 35 g/100 cc of this rice absorbed 412 g boiled, hot water after 10 minutes. The texture of the rehydrated rice was soft and had no structural characteristics of rice.

### Example 3

By following a similar procedure to that described in Example 2, but using regular long grain, milled rice instead of the parboiled rice (the white rice was boiled for 12 minutes instead of 15 minutes for parboiled rice), the dehydrated rice had a bulk density of 37 g/100 cc and 180 g of this rice absorbed 364 g of boiled, hot water after 10 minutes. The rehydrated rice had a good, tender, firm texture better than some commercial instant white rices which required 5 or 7 minutes rehydration.

### Example 4

By following a similar procedure to that described in Example 2, but using arborio rice instead of the parboiled rice (the arborio rice was boiled for 12 min instead of 15 min for parboiled rice), the dehydrated arborio rice had a bulk density of 38 g/100 cc and 180 g of this rice absorbed 365 g of boiled, hot water after 10 minutes. The rehydrated rice had the good, tender texture typical of cooked arborio rice.

### Example 5

By following a similar procedure to that described in Example 1 but wherein the pH of the boiling water was 4.0 instead of 7.0 there used, the dehydrated rice produced had a bulk density of 40 g/100 cc.120 g of this rice product was prepared for consumption by cooking with 230 g of water in a microwave oven (high power) for 5 minutes and the product had a good, tender, firm even texture and an attractive white colour.

### Example 6

By following a similar procedure to that described in Example 2 but wherein the pH of the boiling water was 4.5 instead of 7.0 there used, the dehydrated rice produced had a bulk density of 39 g/100 cc.240 g of this rice product was prepared for consumption by cooking with 460 g of water in a microwave oven (high power) for 8 minutes and the product had a good tender, firm, even texture and an attractive white colour.

## Claims

1. A process for the production of a convenient precooked rice product wherein rice grains are cooked with water at a temperature and for a time sufficient that their moisture content is from 55% to 75% by weight and dried in two stages characterised in that the drying temperature in both stages is from 140° to 185° C and that the drying is carried out firstly under stationary conditions for a period of from 2 to 20 minutes to a moisture content of from 20 to 35% and secondly under agitated conditions for a period of from 30 to 120 seconds to a moisture content of from 3% to 15%, such that the dried rice has a bulk density of from 37 to 42 g/100 cc and an absorbing capacity of from 195 to 225 g of water after 10 minutes rehydration in 500 g hot water which has just been boiled without any further heating.

2. A process according to claim 1 characterised in that the rice grains used are parboiled rice,milled white rice, brown rice, arborio rice or basmati rice.

3. A process according to claim 1 characterised in that the cooking is carried out by boiling the rice grains in water,steaming or by a combination of boiling and steaming.

4. A process according to claim 1 characterised in that the cooking is carried out at a pH from 3.0 to 7.5.

5. A process according to claim 1 characterised in that the cooking is carried out over a period of from 5 to 20 minutes.

6. A process according to claim 1 characterised in that in the first drying step, the rice grains are dried to a moisture content of from 23% to 33%.

7. A process according to claim 1 characterised in that the first drying step, the drying under stationary conditions is carried out on a regular belt dryer.

8. A process according to claim 7 characterised in that the cooked rice is fed onto the dryer in a layer having a thickness of from 2 to 10 mm.

9. A process according to claim 7 characterised in that the duration of the first drying step is from 10 to 20 minutes.

10. A process according to claim 1 characterised in that in the first drying step, the drying under stationary conditions is carried out in a high velocity hot air dryer, the velocity of the hot air is from 100 to 200 metres/min.

11. A process according to claim 10 characterised in that before the first drying step, the cooked rice is dewatered to remove some surface moisture.

12. A process according to claim 10 characterised in that the cooked rice is present as a layer having a thickness of from 5 to 12 mm.

13. A process according to claim 10 characterised in that the duration of the first drying step is from 3 to 7 minutes.

14. A process according to claim 1 characterised in that in the second drying step, the partially dried rice grains are dried to a moisture content of from 6% to 12% by weight.

15. A process according to claim 1 characterised in that the second drying step, the drying under agitated conditions is carried out in a vibrating fluid bed dryer or a high velocity belt dryer with nozzle tubes that produce hot air, the velocity of the hot air is from 20 to 200 metres/min.

16. A convenient precooked rice product having a bulk density of from 37 to 42 g/100 cc and 100 g of which is capable of absorbing from 195 to 225 g of water after 10 minutes rehydratation in 500 g hot water which has just been boiled without any further heating, obtainable by the process as hereinbefore defined.

## Patentansprüche

1. Verfahren zur Herstellung eines vorgekochten Reisfertigproduktes, bei welchem Reiskörner mit Wasser bei einer Temperatur und während einer Zeit gekocht werden, welche dafür ausreichen, daß der Feuchtigkeitsgehalt der Reiskörner 55 Gew.-% bis 75 Gew.-% beträgt, und bei welchem die Reiskörner in zwei Stufen getrocknet werden, dadurch gekennzeichnet, daß die Trocknungstemperatur in beiden Stufen 140° bis 185° C beträgt und daß das Trocknen zuerst unter stationären Bedingungen während einer Zeitspanne von 2 bis 20 min bis auf einen Feuchtigkeitsgehalt von 20 bis 35 % durchgeführt wird und daß das Trocknen der Reiskörner dann unter bewegten Bedingungen während einer Zeitspanne von 30 bis 120 s bis auf einen Feuchtigkeitsgehalt von 3 % bis 15 % derart durchgeführt wird, daß der getrocknete Reis eine Schüttdichte von 37 bis 42 g/100 cm³ und ein Absorptionsvermögen von 195 bis 225g Wasser nach einer 10-minütigen Rehydratisierung in 500g heißem Wasser, welches gerade eben gekocht worden ist, und ohne weiteres Erhitzen aufweist.

2. Verfahren nach Anspruch 1, dadurch gekennzeichnet, daß die Reiskörner halbgar gekochter Reis, polierter weißer Reis, brauner Reis, Arborio-Reis oder Basmati-Reis sind.

3. Verfahren nach Anspruch 1, dadurch gekennzeichnet, daß das Kochen durch Sieden der Reiskörner in Wasser, durch Dämpfen oder durch eine Kombination von Sieden und Dämpfen durchgeführt wird.

4. Verfahren nach Anspruch 1, dadurch gekennzeichnet, daß das Kochen bei einem pH-Wert von 3,0 bis 7,5 durchgeführt wird.

5. Verfahren nach Anspruch 1, dadurch gekennzeichnet, daß das Kochen während einer Zeitspanne von 5 bis 20 min durchgeführt wird.

6. Verfahren nach Anspruch 1, dadurch gekennzeichnet, daß die Reiskörner in der ersten Trocknungsstufe auf einen Feuchtigkeitsgehalt von 23 % bis 33 % getrocknet werden.

7. Verfahren nach Anspruch 1, dadurch gekennzeichnet, daß die erste Trocknungsstufe, nämlich das Trocknen unter stationären Bedingungen, auf einem üblichen Bandtrockner durchgeführt wird.

8. Verfahren nach Anspruch 7, dadurch gekennzeichnet, daß der gekochte Reis in einer Schicht von 2 bis 10 mm Dicke auf den Trockner aufgebracht wird.

9. Verfahren nach Anspruch 7, dadurch gekennzeichnet, daß die Dauer der ersten Trocknungsstufe 10 bis 20 min beträgt.

10. Verfahren nach Anspruch 1, dadurch gekennzeichnet, daß das Trocknen in der ersten Trocknungsstufe unter stationären Bedingungen in einem Heißluft-Düsenstrahltrockner durchgeführt wird, wobei die Geschwindigkeit der Heißluft 100 bis 200 m/min beträgt.

11. Verfahren nach Anspruch 10, dadurch gekennzeichnet, daß der gekochte Reis vor der ersten Trocknungsstufe entwässert wird, um etwas von der Oberflächenfeuchtigkeit zu entfernen.

12. Verfahren nach Anspruch 10, dadurch gekennzeichnet, daß der gekochte Reis als eine Schicht mit einer Dicke von 5 bis 12 mm vorliegt.

13. Verfahren nach Anspruch 10, dadurch gekennzeichnet, daß die Dauer der ersten Trocknungsstufe 3 bis 7 min beträgt.

14. Verfahren nach Anspruch 1, dadurch gekennzeichnet, daß in der zweiten Trocknungsstufe die teilweise getrockneten Reiskörner auf einen Feuchtigkeitsgehalt von 6 Gew.-% bis 12 Gew.-% getrocknet werden.

15. Verfahren nach Anspruch 1, dadurch gekennzeichnet, daß die zweite Trocknungsstufe, nämlich das Trocknen unter bewegten Bedingungen, in einem Wirbelschichtrütteltrockner oder in einem Düsenstrahlbandtrockner mit Heißluft fördernden Blasdüsen durchgeführt wird, wobei die Geschwindigkeit der Heißluft 20 bis 200 m/min beträgt.

16. Vorgekochtes Reisfertigprodukt, das eine Schüttdichte von 37 bis 42 g/100 cm³ aufweist und von welchem 100 g befähigt sind, 195 bis 225 g Wasser nach einer 10-minütigen Rehydratisierung in 500 g heißem Wasser, welches gerade eben gekocht worden ist, und ohne weiteres Erhitzen, zu absorbieren, und welches Reisprodukt nach dem oben definierten Verfahren erhältlich ist.

## Revendications

1. Procédé de production d'un riz précuit d'utilisation commode, dans lequel les grains de riz sont soumis à une cuisson avec de l'eau à une température et pendant un temps suffisants pour que leur teneur en humidité soit comprise dans l'intervalle de 55 % à 75 % en poids et sont séchés en deux étapes, caractérisé en ce que la température de séchage dans les deux étapes est comprise dans l'intervalle de 140° à 185°C et que le séchage est effectué tout d'abord dans des conditions stationnaires pendant un temps de 2 à 20 minutes à une teneur en humidité de 20 à 35 % et, deuxièmement, sous agitation pendant un temps de 30 à 120 secondes à une teneur en humidité de 3 % à 15 %, de sorte que le riz séché possède une masse volumique apparente de 37 à 42 g/100 cm³ et une capacité d'absorption de 195 à 225 g d'eau après une réhydratation pendant 10 minutes dans 500 g d'eau chaude venant juste d'être portée à ébullition, sans aucun chauffage supplémentaire.

2. Procédé suivant la revendication 1, caractérisé en ce que le riz en grains utilisé consiste en riz demi-cuit, en riz blanc, en riz brun, en riz arborio ou en riz basmati.

3. Procédé suivant la revendication 1, caractérisé en ce que la cuisson est effectuée par ébullition des grains de riz dans de l'eau, par cuisson à la vapeur d'eau ou par une association d'ébullition et de cuisson à la vapeur d'eau.

4. Procédé suivant la revendication 1, caractérisé en ce que la cuisson est conduite à un pH de 3,0 à 7,5.

5. Procédé suivant la revendication 1, caractérisé en ce que la cuisson est conduite pendant un temps de 5 à 20 minutes.

6. Procédé suivant la revendication 1, caractérisé en ce que, dans la première étape de séchage, les grains de riz sont séchés à une teneur en humidité de 23 % à 33 %.

7. Procédé suivant la revendication 1, caractérisé en ce que, dans la première étape de séchage, le séchage dans des conditions stationnaires est effectué sur un appareil de séchage usuel à bande.

8. Procédé suivant la revendication 7, caractérisé en ce que le riz cuit est placé sur l'appareil de séchage en une couche ayant une épaisseur de 2 à 10 mm.

9. Procédé suivant la revendication 7, caractérisé en ce que la durée de la première étape de séchage est comprise dans l'intervalle de 10 à 20 minutes.

10. Procédé suivant la revendication 1, caractérisé en ce que, dans la première étape de séchage, le séchage dans des conditions stationnaires est effectué dans un appareil de séchage à air chaud à grande vitesse, la vitesse de l'air chaud étant comprise dans l'intervalle de 100 à 200 mètres/minute.

11. Procédé suivant la revendication 10, caractérisé en ce que, avant la première étape de séchage, le riz cuit est soumis à un essorage pour éliminer une certaine humidité en surface.

12. Procédé suivant la revendication 10, caractérisé en ce que le riz cuit est présent sous forme d'une couche ayant une épaisseur de 5 à 12 mm.

13. Procédé suivant la revendication 10, caractérisé en ce que la durée de la première étape de séchage est comprise dans l'intervalle de 3 à 7 minutes.

14. Procédé suivant la revendication 1, caractérisé en ce que, dans la seconde étape de séchage, les grains de riz partiellement séchés sont séchés à une teneur en humidité de 6 % à 12 % en poids.

15. Procédé suivant la revendication 1, caractérisé en ce que, dans la seconde étape de séchage, le séchage sous agitation est effectué dans un appareil de séchage vibrant à lit fluide ou un appareil de séchage à courroie à grande vitesse avec des tuyères qui fournissent de l'air chaud, la vitesse de l'air chaud étant comprise dans l'intervalle de 20 à 200 mètres/minute.

16. Riz précuit d'utilisation commode ayant une masse volumique apparente de 37 à 42 g/100 cm³ et dont 100 g sont capables d'absorber 195 à 225 g d'eau après une réhydratation de 10 minutes dans 500 g d'eau chaude venant d'être portée à l'ébullition, sans aucun chauffage supplémentaire, pouvant être obtenu par mise en oeuvre du procédé répondant à la définition précitée.
